# EUROPEAN PATENT SPECIFICATION

(11) **EP 1 918 699 B1**
(45) Date of publication and mention of the grant of the patent: **17.05.2017**
(21) Application number: 07021563.7
(22) Date of filing: 06.11.2007
(51) Int. Cl.: G01N 27/407

(54) **Gas sensor with a protector**
Gassensor
Capteur de gaz

(30) Priority: 06.11.2006 JP 2006300580
(43) Date of publication of application: 07.05.2008
(73) Proprietor: NGK SPARK PLUG CO., LTD., Mizuho-ku Nagoya-shi Aichi (JP)
(72) Inventor: Okumura, Tatsuya, Nagoya-shi, Aichi (JP); Ishikawa, Satoshi, Nagoya-shi, Aichi (JP); Oba, Takehiro, Nagoya-shi, Aichi (JP); Funahashi, Tomohiko, Nagoya-shi, Aichi (JP)
(74) Representative: Herrmann, Uwe

(56) References cited:
- EP-A- 1 541 999
- JP-A- 2003 161 718
- JP-U- H 032 256
- US-A- 4 098 653
- US-A- 5 707 504

## Description

### FIELD OF THE INVENTION

The present invention relates to a gas sensor having a protector for protecting a detecting element, which is exposure to a gas to be measured, from being exposed to water and the like.

### BACKGROUND OF THE INVENTION

Conventionally, a gas sensor is known which has a detecting element in which electromotive forces of different magnitudes are produced or its resistance value changes in correspondence with the concentration of a particular gas, such as nitrogen oxides (NOx) and oxygen, in exhaust gas emitted from an automobile or the like. This gas sensor is used by being installed in an exhaust pipe or the like of the automobile, but since the detecting element is exposed to the high-temperature exhaust gas, if the detecting element is subjected to a thermal shock due to the attachment of water (exposure to water) contained in the exhaust gas, cracks can possibly occur. Accordingly, a protector for covering the detecting element is fitted to the gas sensor, and the detecting element is protected from exposure to water.

As the protector of the gas sensor, a protector having a dual structure is known which is comprised of an inner protector which covers a leading end portion of the detecting element projecting from a metal shell, as well as an outer protector which surrounds a radial periphery while keeping a gap space with respect to that inner protector (e.g., refer to JP-A-2004-109125 (corresponding to EP 1541999 A1)). In such a protector having the dual structure, a plurality of outer introduction holes and inner introduction holes are respectively formed in the outer protector and the inner protector, and the exhaust gas follows a route along which the exhaust gas is introduced into the gap space between the outer protector and the inner protector through the outer introduction holes, and is further introduced into the inner protector through the inner introduction holes, so as to be brought into contact with the detecting element.

Incidentally, a guide body extending into the interior of the gap space is attached to each outer introduction hole of the outer protector of the gas sensor in JP-A-2004-109125 (corresponding to EP 1541999 A1). This guide body guides the flow passage of the exhaust gas which is introduced into the gap space through the outer introduction holes, and produces a swirl flow which surrounds the outer peripheral surface of the inner protector. Owing to the inertial force produced in conjunction with this swirl flow, relatively heavy water droplets and a relatively light gas component are separated. Then, protection of the detecting element from exposure to water is made more reliable by allowing mainly the gas component to be introduced into the inner protector through the inner introduction holes. In JP-A-2004-109125 (corresponding to EP 1541999 A1), the angle of the guide body (angle with respect to an outer peripheral tangential line) extending into the gap space from the outer introduction hole is stipulated to ensure that the separation between the gas component and the water droplets by the production of such a swirl flow can be effected more reliably.

### SUMMARY OF THE INVENTION

However, in a case where the outside diameter of the protector is made smaller in view of the demand for the miniaturization of the gas sensor, since the distance between the outer peripheral surface of the inner protector and the inner peripheral surface of the outer protector in the gap space becomes small, with the guide body of JP-A-2004-109125 (corresponding to EP 1541999 A1) there arose a possibility of the guide bodies coming into contact with the inner protector, thereby hampering the production of the swirl flow. Accordingly, if the bending angle of the guide bodies was made smaller, the gap between the outer introduction hole and the guide body became small, so that there arose a problem in that the amount of introduction, per se, of the exhaust gas which is introduced into the gap space decreases, and the response becomes dull due to a decline in gas exchangeability.

The invention has been devised to overcome the above-described problems, and its object is to provide a gas sensor which is capable of attaining a reduction in diameter without decreasing the amount of introduction of the gas to be measured which is introduced into the gap space between the outer protector and the inner protector of the dual structure through the outer introduction holes each having the guide body attached thereto.

To attain the above object, in accordance with one aspect of the invention there is provided a gas sensor comprising: a detecting element (10) having on a leading end side thereof a detecting portion (11) for detecting a gas to be measured; a housing (50) surrounding the detecting element such that the detecting element protrudes from a leading end of the housing; an inner protector (120) fixed in the housing and accommodating therein the detecting portion of the detecting element, the inner protector having a side wall (122) provided with an inner introduction hole (130) for introducing the gas to be measured into an interior of the inner protector; an outer protector (110) surrounding at least the side wall of the inner protector while keeping a gap space (119) with respect to the inner protector, the outer protector having a side wall (112) provided with an outer introduction hole (170) for introducing the gas to be measured into the gap space; and a guide body (180) having a proximal end (181) connected to an opening edge (171) of the outer introduction hole and a distal end (182) protruding into the gap space toward the inner protector, the guide body being extended substantially in a circumferential direction of the outer protector and adapted to guide a flow passage of the gas to be measured which is introduced into the gap space (119), wherein, in a cross-sectional plane (A-A) perpendicular to an axis (0) of the gas sensor and on an outer peripheral surface (118) side of the outer protector, a length (L1) along the circumferential direction of the outer introduction hole is longer than a length (L2) between the distal end and the proximal end of the guide body.

Since the configuration provided is such that the length L1 along the circumferential direction of the outer introduction hole is longer than the length (extending length) L2 between the distal end and the proximal end of the guide body, it is possible to further enlarge the gap between the outer introduction hole and the guide body, thereby making it possible to sufficiently secure the amount of introduction of the exhaust gas which is introduced through the outer introduction hole. Consequently, it is possible to obtain an excellent response speed in the detection of a gas to be measured. To sufficiently obtain such an effect, the distance between the distal end of the guide body and an opening edge of the outer introduction hole should preferably be 0.5 mm or more. In addition, to prevent the entry of excess water, the distance between the distal end of the guide body and the opening edge of the outer introduction hole should preferably be 1.5 mm or less, more preferably 1.2 mm or less.

Furthermore, to sufficiently secure the amount of introduction of the gas to be measured which is introduced through the outer introduction hole, a relationship between the length (L1) along the circumferential direction of the outer introduction hole and the length (L2) between the distal end and the proximal end of the guide body (180) should preferably be such that 0.5 ≤ L2/L1 ≤ 0.75.

In addition, to introduce the gas to be measured efficiently and form a swirl flow, a distance between the distal end of the guide body and the opening edge of the outer introduction hole should preferably be greater than a distance between the distal end of the guide body and the side wall of the inner protector.

In addition, in the gas sensor according to another aspect of the invention, a plurality of the guide bodies are provided along the circumferential direction, the plurality of the guide bodies comprising a first guide body (an arbitrary one selected from the plurality of the guide bodies) and a second guide body provided closest to a distal end side of the first guide body (280) , and when the outer protector and the inner protector are viewed by being projected onto a hypothetical plane perpendicular to an axis of the gas sensor, an outer peripheral surface of the first guide body should preferably be disposed in an acute-angled region sandwiched between a first hypothetical straight line (M) which passes through a point (K) on an outer peripheral surface side at a proximal end of the first guide body and passes through a point (I) on an inner peripheral surface side at a proximal end of the second guide body, and a second hypothetical straight line (N) which passes through the point K on the outer peripheral surface side at the proximal end of the first guide body and which circumscribes an outer peripheral surface of the side wall of the inner protector.

Furthermore, as for the gas to be measured which is introduced into the gap space through the first outer introduction hole, as its flow passage is guided in such a manner as to directly collide against an inner peripheral surface of the second guide body, a swirl flow is produced, thereby allowing the gas to be measured to be separated from water. Further, some part of the gas to be measured has its flow passage guided in such a way as to pass through the gap between the second guide body and the outer peripheral surface of the inner protector and collide against another guide body located on the downstream side of the flow passage. However, since the number of collisions against the wall surfaces is small, a decline in the flow rate is suppressed, and the gas to be measured is efficiently separated from water.

It should be noted that in a case where the outer peripheral surface of the first guide body is disposed outside the aforementioned region relative to the first hypothetical straight line, in terms of the passage of the gas to be measured, cases increase in which the gas to be measured follows a route in which after entering the gap space through the first outer introduction hole, the gas to be measured collides against the inner peripheral surface of the outer protector between the other end of the first outer introduction hole and one end of the second outer introduction hole. The gas to be measured which rebounded by that inner peripheral surface is guided to a flow passage in which the gas to be measured further collides against the inner peripheral surface of the second guide body to produce the above-described swirl flow. However, since two collisions occur in total, the flow rate decreases, so that there is a possibility that the separation of the gas to be measured from water fails to be effected sufficiently. In addition, since the gap between the other end of the first outer introduction hole and the other end of the first guide body also becomes narrow, the amount of introduction, per se, of the exhaust gas can possibly decrease, so that there is a possibility that the response speed in detecting the gas to be measured by the detecting element 10 hampered.

On the other hand, in a case where the outer peripheral surface of the first guide body is disposed outside the aforementioned region relative to the second hypothetical straight line, in terms of the passage of the gas to be measured, cases increase in which the gas to be measured follows a route in which after entering the gap space through the first outer introduction hole, the gas to be measured directly collides against outer peripheral surface of the inner protector. The gas to be measured which rebounded by that outer peripheral surface is guided to a flow passage in which the gas to be measured further collides against the inner peripheral surface of the second guide body to produce the above-described swirl flow. However, since two collisions occur in total, the flow rate decreases in the same way as described above. In addition, since the inner peripheral surface of the second guide body faces the direction of the passage of the exhaust gas at an angle closer to perpendicularity thereto, so that the gas to be measured which collides against the second guide body becomes difficult to be guided in the swirling direction. Hence, there is a possibility that the separation of the gas to be measured from water (water droplets) fails to be effected sufficiently.

### BRIEF DESCRIPTION OF THE DRAWINGS

Fig. 1 is a partial cross-sectional view of a gas sensor 1;
Fig. 2 is an enlarged cross-sectional view of a leading end side of the gas sensor 1;
Fig. 3 is a perspective view for explaining a guide body 180 attached to an outer introduction hole 170 of an outer protector 110;
Fig. 4 is a cross-sectional view, taken in the direction of the arrows along the two-dot chain line A - A in Fig. 2, of the protector 100; and
Fig. 5 is a partial cross-sectional view of a modified embodiment of a gas sensor 1.

### Description of Reference Numerals:

- 1:: gas sensor
- 10:: detecting element
- 11:: detecting portion
- 50:: metal shell
- 56:: leading-end engaging portion
- 110:: outer protector
- 112:: (outer) side wall
- 113:: (outer) leading end portion
- 121:: base end portion
- 122:: (inner) side wall
- 123:: (inner) leading end portion (inner tapered portion)
- 124:: bottom wall
- 125:: discharge hole
- 128:: outer peripheral surface
- 129:: gas detection chamber
- 130:: inner introduction hole
- 170:: outer introduction hole
- 171, 271, 371:: one opening edge
- 172, 272:: other opening edge
- 180:: guide body
- 181, 281, 381:: proximal end
- 182, 282:: distal end
- 213:: (outer) tapered portion
- 270:: first outer introduction hole
- 280:: first guide body
- 283:: outer peripheral surface
- 370:: second outer introduction hole
- 380:: second guide body
- 383:: inner peripheral surface

### DETAILED DESCRIPTION OF THE INVENTION

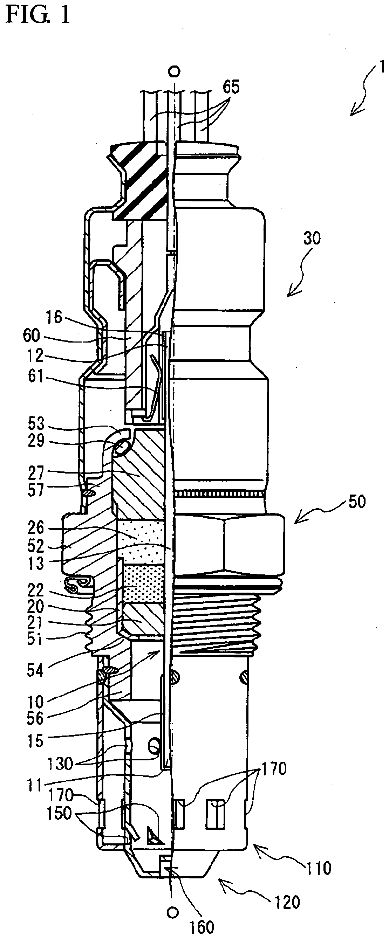

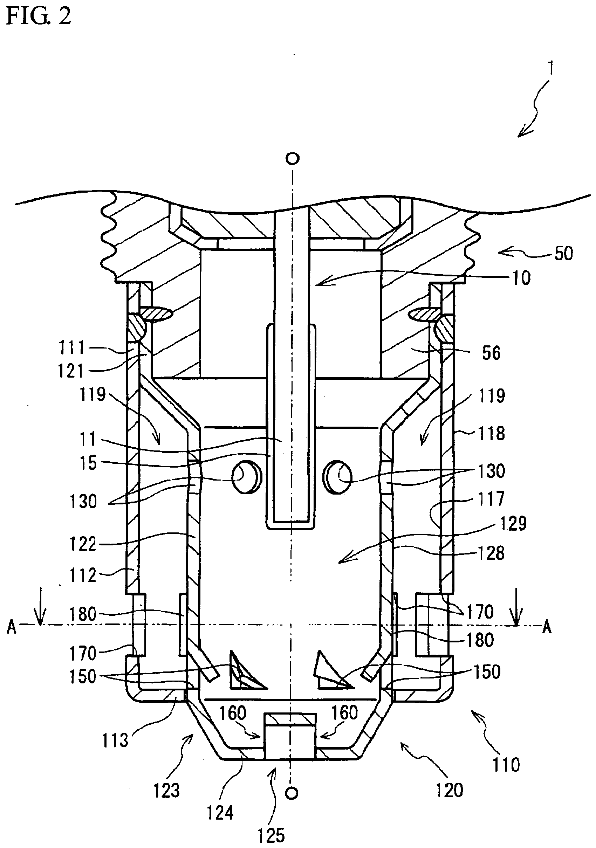

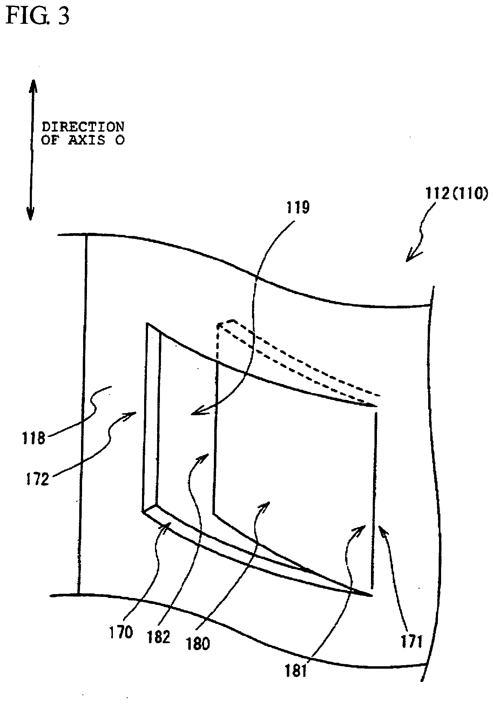

Referring now to the drawing, a description will be given of an embodiment of a gas sensor in accordance with the invention. First, a description will be given of the structure of a gas sensor 1 with reference to Figs. 1 to 3. Fig. 1 is a partial cross-sectional view of the gas sensor 1. Fig. 2 is an enlarged cross-sectional view of a leading end side of the gas sensor 1. Fig. 3 is a perspective view for explaining a guide body 180 attached to an outer introduction hole 170 of an outer protector 110.

The gas sensor 1 shown in Fig. 1 is a so-called full-range air-fuel ratio sensor which is installed in an exhaust pipe (not shown) of an automobile, and in which a detecting portion 11 of a detecting element 10 held therein is exposed to exhaust gas including a gas to be measured circulating in the exhaust pipe, and detects an air-fuel ratio of the exhaust gas from an oxygen concentration in the exhaust gas.

The detecting element 10 has a plate shape extending the direction of an axis O and has a solid electrolyte formed mainly of zirconia and a detection electrode formed mainly of platinum, and the detection electrode is disposed in the detecting portion 11 on the leading end side of the detecting element 10. The detecting element 10 incorporates a heater which effects heating for early activation of the detecting portion 11. Further, a protective layer 15 is formed on the detecting portion 11 of the detecting element 10 in such a manner as to surround its outer peripheral surface so as to protect the detection electrode from poisoning by the exhaust gas. In addition, electrode pads 16 (one of them is shown in Fig. 1) are formed on a rear end portion 12 on the rear end side of the detecting element 10.

The detecting element 10 is held in a metal shell 50, which serves as a housing, by means of a metal cup 20, an alumina-made ceramic ring 21, a talc ring 22, a talc ring 26, and a ceramic sleeve 27 which are caulked between a caulked portion 53 and a stepped portion 54 of the metal shell 50. In addition, the metal shell 50 has on its outer periphery a leading-end engaging portion 56 for engagement with a below-described protector 100, an externally threaded portion 51 for mounting to the exhaust pipe, a tool engaging portion 52, a rear end engaging portion 57 for engagement with a below-described outer cylinder 30, and the caulked portion 53.

The outer cylinder 30 is joined to the rear end engaging portion 57 of the metal shell 50. A ceramic separator 60 for covering the rear end portion 12 of the detecting element 10 protruding from the rear end of the metal shell 50 is provided in the outer cylinder 30. In the separator 60, the electrode pads 16 are connected to connection terminals 61 which are connected to an external circuit through lead wires 65.

On the other hand, the outer protector 110 and an inner protector 120 are fitted to the leading-end engaging portion 56 of the metal shell 50 so as to cover the detecting portion 11 of the detecting element 10. Hereafter, a description will be given of the outer protector 110 and the inner protector 120 with reference to Fig. 2. The inner protector 120 has a bottomed cylinder shape and has a plurality of inner introduction holes 130 in its side wall 122. Meanwhile, the outer protector 110 has a cylindrical shape surrounding a radial periphery of the inner protector 120, and has the plurality of outer introduction holes 170 in its side wall 112. A gap space 119 is formed between an outer peripheral surface 128 of the side wall 122 of the inner protector 120 and an inner peripheral surface 117 of the side wall 112 of the outer protector 110. It should be noted that the radial distance of the gap space 119 is 1.0 mm in this embodiment.

As for the inner protector 120, the outside diameter of its side wall 122 is formed to be smaller than the outside diameter of the leading-end engaging portion 56 of the metal shell 50. A base end portion 121 which is made larger in diameter than the side wall 122 is fixed to the leading-end engaging portion 56 of the metal shell 50 by laser welding-all-around. Meanwhile, a leading end portion 123 is formed into a tapered shape in such a manner as to be tapered from the side wall 122 toward a bottom wall 124.

In addition, on the leading end side of the side wall 122 of the inner protector 120, drain holes 150, which are each openly formed by bending an L-shaped slit portion into the interior of a gas detection chamber 129, are formed at a plurality of (in this embodiment, six) circumferential portions of the outer peripheral surface 128. These drain holes 150 are provided as guide paths for allowing water (water droplets) and the like contained in the exhaust gas introduced into the gap space 119 to be discharged to the outside through the gas detection chamber 129.

A discharge hole 125 with discharge ports 160 for discharging to the outside the exhaust gas and water droplets introduced into the gas detection chamber 129 is provided in the bottom wall 124 of the inner protector 120. The discharge hole 125 with discharge ports 160 is formed by caving in a portion of the bottom wall 124 on the leading end side of the inner protector 120 in such a form as to be pressed from the outer side toward the inner side.

Next, the outer protector 110 has a base end portion 111 which is joined to an outer periphery of the base end portion 121 of the inner protector 120 by such as spot welding or laser welding-all-around. In addition, a leading end portion 113 of this outer protector 110 in the vicinity of the leading end portion 123 of the inner protector 120 is bent inwardly toward the outer peripheral surface 128 of the side wall 122 of the inner protector 120. The leading end portion 113 abuts against the outer peripheral surface 128 of the inner protector 120, but the invention is not limited to the same and the leading end portion 113 may be spaced apart therefrom. The tapered leading end portion 123 of the inner protector 120 protrudes axially outwardly of the leading end portion 113 of the outer protector 110.

In addition, the plurality of (in this embodiment, six) outer introduction holes 170 for allowing the outside of the outer protector 110 and the gap space 119 to communicate with each other are formed along the circumferential direction in the side wall 112 of the outer protector 110 at positions located forwardly of the positions where the inner introduction holes 130 of the inner protector 120 are formed. The guide bodies 180 which extend inwardly (into the gap space 119) are respectively attached to these outer introduction holes 170. As shown in Fig. 3, the guide body 180 is formed by being bent inwardly such that its distal end 182 approaches the side wall 122 of the inner protector 120 in a state in which its proximal end 181 is connected to an opening edge 171 of the outer introduction hole 170.

The exhaust gas circulating in the exhaust pipe is introduced into the gap space 119 through the outer introduction holes 170 of the outer protector 110. At this time, the exhaust gas has a flow passage direction guided by the guide body 180, and a swirl flow along the outer peripheral surface 128 of the side wall 122 of the inner protector 120 is produced in the gap space 119. Owing to the inertial force produced in conjunction with this swirl flow, relatively heavy water (water droplets) and a relatively light gas component which are contained in the exhaust gas are separated, and the water having a larger specific gravity is introduced into the gas detection chamber 129 of the inner protector 120 through the drain holes 150, whereas the gas component is introduced into the gas detection chamber 129 through the inner introduction holes 130. The gas sensor 1 detects the oxygen concentration in the exhaust gas as the gas component in the exhaust gas introduced into the gas detection chamber 129 is brought into contact with the detecting portion 11 of the detecting element 10. On the other hand, if the exhaust gas circulating in the exhaust pipe collides against the leading end portion 123 of the inner protector 120, a gas flow is produced in which the gas flows toward the bottom wall 124 along the taper. Since negative pressure is generated in the vicinity of the discharge hole 125 owing to this gas flow, the exhaust gas and water droplets in the gas detection chamber 129 are discharged in such a manner as to be sucked to the outside through the discharge ports 160.

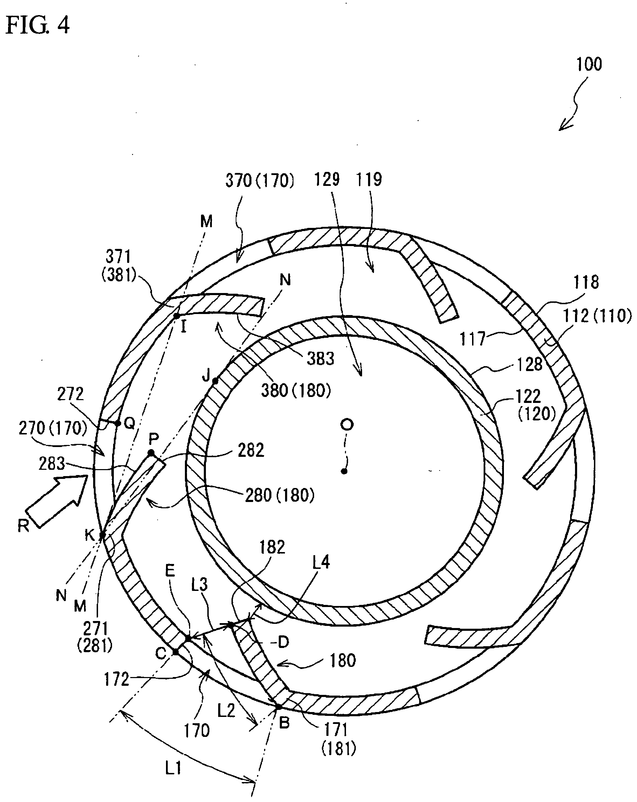

Incidentally, with the gas sensor 1 in this embodiment, stipulations are provided for the size and the extending direction of the guide body 180 so that the amount of introduction of the exhaust gas which is introduced into the gap space 119 through the outer introduction hole 170 can be sufficiently secured even if the distance between the inner peripheral surface 117 of the outer protector 110 and the outer peripheral surface 128 of the inner protector 120 is made smaller in conjunction with the reduction of the diameter. Hereafter, referring to Fig. 4, a description will be given of stipulations concerning the guide body 180. Fig. 4 is a cross-sectional view, taken in the direction of the arrows along the two-dot chain line A - A in Fig. 2, of the outer protector 110 and the inner protector 120.

First, a description will be given of the stipulation on the size of the guide body 180 attached to the outer introduction hole 170. As shown in Fig. 4, the outer introduction hole 170 is formed along the circumferential direction from one opening edge 171 to the other opening edge 172. Here, it is assumed that the length along the circumferential direction between a point B on an outer peripheral surface 118 side of the one opening edge 171 (= the proximal end 181 of the guide body 180) and a point C on the outer peripheral surface 118 side of the other opening edge 172 is L1. It should be noted that, in this embodiment, L1 = 3.0 mm. In addition, it is assumed that the length along the extending direction between the point B on the outer peripheral surface 118 side of the proximal end 181 of the guide body 180 and a point D on the outer peripheral surface 118 side of the distal end 182 is L2. It should be noted that, in this embodiment, L2 = 2.0 mm. Namely, in this embodiment, the configuration is provided such that L1 is made longer than L2. It is preferable that L1 is made longer than L2 by 0.3 mm or more, and in this embodiment, L1 - L2 - 3.0 mm . 2.0 mm = 1,0 mm. Thus, as the size of the guide body 180 is stipulated so that L1 becomes larger than L2, it is possible to further enlarge the gap between the outer introduction hole 170 and the guide body 180, thereby making it possible to sufficiently secure the amount of introduction of the exhaust gas which is introduced through the outer introduction holes 170.

Further, in this embodiment, L2/L1 = 0.67. Since the relationship between L1 and L2 is 0.5 ≤ L2/L1 ≤ 0. 75, the amount of introduction of the gas to be measured which is introduced through the outer introduction holes can be secured sufficiently. In addition, in this embodiment, a distance L3 between the point D on the outer peripheral surface 118 side of the distal end 182 of the guide body 180 and a point E on the inner peripheral surface 117 side of the opening edge 172 of the outer introduction hole 170 is set to be greater than a distance L4 between an edge of the distal end 182 of the guide body 180 on the outer peripheral surface 128 side of the inner protector 120 and the outer peripheral surface 128 of the inner protector 120, so that the separation of air and water can be performed effectively by virtue of the swirl flow while securing the amount of introduction of the gas.

Next, a description will be given of the stipulation on the extending direction of the guide body 180.

Specifically, as shown in Fig. 4, on the outer peripheral surface 118 of the outer protector 110, a first guide body 280 is attached to a first outer introduction hole 270 among the six outer introduction holes 170 formed along the circumferential direction about the axis O. The first outer introduction hole 270 is open from one opening edge 271 to the other opening edge 272 of both opening edges in the circumferential direction. Further, the first guide body 280 extends from a proximal end 281 connected to the one opening edge 271 to a distal end 282. Further, the first guide body 280 has an outer peripheral surface 283 connecting a point K on the outer peripheral surface side of the proximal end 281 and a point P on the outer peripheral surface side of the distal end 282.

Meanwhile, a second outer introduction hole 370 which is formed circumferentially most closely to the distal end 282 of the first guide body 280 has a second guide body 380. A proximal end 381 of the second guide body 380 is connected to one opening edge 371 of the second outer introduction hole 370.

Next, it is assumed that a hypothetical straight line which passes through the point K on the outer peripheral surface 283 side of the proximal end 281 (= the one opening edge 271 of the first outer introduction hole 270) of the first guide body 280 and passes through a point I on the inner peripheral surface 117 side of the proximal end 381 (= the one opening edge 371 of the second outer introduction hole 370) of the second guide body 380 is a first hypothetical straight line M - M, and that a hypothetical straight line which passes through the point K and which is a tangential line (whose point of contact is a point J) of the outer peripheral surface 128 of the inner protector 120 is a second hypothetical straight line N - N. Then, a region is formed which is sandwiched by the first hypothetical straight line M - M and the second hypothetical straight line N - N and which forms an acute angle at the point K. In this embodiment, the configuration provided is such that the outer peripheral surface 283 of the first guide body 280 is disposed in this region.

For example, as for the exhaust gas which is introduced into the gap space 119 through the first outer introduction hole 270, its flow passage is guided such that, after passing through the gap between the point P and a point Q on the inner peripheral surface 117 side of the other opening edge 272 of the first outer introduction hole 270, as indicated by an arrow R, the exhaust gas enters the gap space 119, and then directly collides against an inner peripheral surface 383 of the second guide body 380, thereby producing a swirl flow. Consequently, since the number of collisions against the wall surfaces is small, a decline in the flow rate is suppressed, and the gas to be measured is efficiently separated from water.

Furthermore, in this embodiment, a rectilinear distance (which is equal to the aforementioned distance between the points E and D) between the point Q on the inner peripheral surface 117 side of the other opening edge 272 of the first outer introduction hole 270 and the point P on the outer peripheral surface 283 side of the distal end 282 of the first guide body 280 is 0.85 mm. Thus, as the rectilinear distance between the points Q and P becomes 0. 5 mm or more, it is possible to prevent a decrease in the amount of introduction, per se, of the exhaust gas into the gap space 119, and prevent the speed of detecting the oxygen concentration by the detecting element 10 from being impaired. In addition, it is possible to prevent the occurrence of the clogging of the outer introduction holes 270 caused by deposits (e.g., poisoning deposits such as those of fuel ash and oil components) of substances contained in the exhaust gas. In addition, since the rectilinear distance between the points Q and P becomes 1.5 mm or less, it becomes difficult for water to enter the gap space between the outer protector and the inner protector, so that the possibility of occurrence of cracks of the detecting element due to exposure to water becomes low.

In addition, in this embodiment, the outer introduction holes 170 are formed at at least four portions along the circumferential direction of the outer protector 110. In the gas sensor 1 which is threadedly engaged with a mounting hole (not shown) of the internal combustion engine by the externally threaded portion 51 of the metal shell 50, the exhaust gas circulating in the exhaust pipe from a different direction (e. g. , a perpendicular direction) from the direction of the axis O collides against the protector 100 which is exposed in that exhaust pipe. At this time, if the outer introduction holes 170 are formed at four or more portions, as described above, any one or ones of the outer introduction holes 170 can be directed toward the upstream side of the flow passage of the exhaust gas, so that it is possible to obtain excellent efficiency in the introduction of the exhaust gas into the gap space 119.

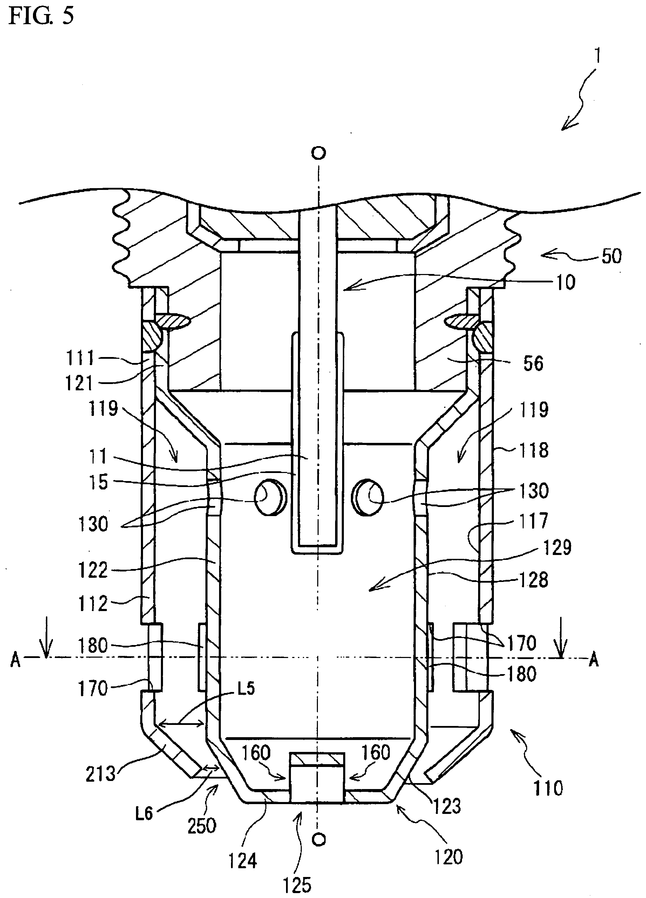

It should be noted that, in the above-described embodiment, the leading end portion 113 of the outer protector 110 substantially abuts against the outer peripheral surface of the inner protector 120. Further, the drain holes 150 are provided in the inner protector 120 for discharging water droplets and the like. In contrast, in a modification shown in Fig. 5, a leading end portion (outer tapered portion) 213 of the outer protector 110 has a tapered shape in the same way as the leading end portion (inner tapered portion) 123 of the inner protector 120. The leading end portion 213 of the outer protector 110 is opposed to the leading end portion 123 of the inner protector 120 with a gap 250 therebetween. Since water droplets which entered the gap space 119 can be discharged through this gap 250, the drain holes 150 are not formed in the inner protector 120 in this modification. In addition, since the design provided is such that a distance L6 between a distal end of the leading end portion 213 and the inner protector is smaller than a distance L5 between a proximal end of the leading end portion 213 and the inner protector, the gas is made difficult to enter.

The invention is similarly applicable to a protector which is used in an NOx sensor, an HC sensor, a temperature sensor, or the like.

## Claims

1. A gas sensor (1) comprising:
a detecting element (10) having a detecting portion (11) for detecting a gas to be measured on a leading end side of the detecting element (10);
a housing (50) surrounding the detecting element (10) such that the detecting element (10) protrudes from a leading end of the housing (50);
an inner protector (120) fixed in the housing (50) and accommodating the detecting portion (11) of the detecting element (10), the inner protector (120) having a side wall (122) provided with an inner introduction hole (130) for introducing the gas to be measured into an interior of the inner protector (120);
an outer protector (110) surrounding at least the side wall (122) of the inner protector (120) while keeping a gap space (119) with respect to the inner protector (120), the outer protector (110) having a side wall (112) provided with an outer introduction hole (170) for introducing the gas to be measured into the gap space (119); and
a guide body (180) having a proximal end (181) connected to an opening edge (171) of the outer introduction hole (170) and a distal end (182) protruding into the gap space (119) toward the inner protector (120), the guide body (180) being extended substantially in a circumferential direction of the outer protector (110) and adapted to guide a flow passage of the gas to be measured which is introduced into the gap space (119),
wherein, in a cross-sectional plane (A-A) perpendicular to an axis (O) of the gas sensor and on an outer peripheral surface (118) side of the outer protector (110), a length (L1) along the circumferential direction of the outer introduction hole (170) is longer than a length (L2) between the distal end (182) and the proximal end (181) of the guide body (180).

2. The gas sensor (1) according to claim 1, wherein the length (L1) along the circumferential direction of the outer introduction hole (170) and the length (L2) between the distal end (182) and the proximal end (181) of the guide body (180) satisfy a relationship, 0.5 ≤ L2/L1 ≤ 0.75.

3. The gas sensor (1) according to claim 1 or 2, wherein a distance between the distal end (182) of the guide body (180) and an opening edge (172) of the outer introduction hole (170) is greater than a distance between the distal end (182) of the guide body (180) and the side wall (122) of the inner protector (120)

4. The gas sensor (1) according to any one of claims 1 to 3, wherein a distance between the distal end (182) of the guide body (180) and an opening edge (172) of the outer introduction hole (170) is 0.5 mm or more.

5. The gas sensor (1) according to any one of claims 1 to 4, wherein the distance between the distal end (182) of the guide body (180) and an opening edge (172) of the outer introduction hole (170) is 1.5 mm or less.

6. The gas sensor (1) according to claim 5, wherein the distance between the distal end (182) of the guide body (180) and an opening edge (172) of the outer introduction hole (170) is 1.2 mm or less.

7. The gas sensor (1) according to any one of claims 1 to 6, wherein the guide body (180) is formed by inwardly bending a portion of the side wall (112) of the outer protector (110), and in case the guide body (180) is bent back so as to be oriented to be close to the side wall (112) of the outer protector (110), the length (L1) along the circumferential direction of the outer introduction hole (170) and the length (L2) between the distal end (182) and the proximal end (181) of the guide body (180) satisfy a relationship, L1 - L2 ≥ 0.3 mm.

8. The gas sensor (1) according to any one of claims 1 to 7, wherein, a plurality of the guide bodies (180, 280, 380) are provided along the circumferential direction, the plurality of the guide bodies comprising a first guide body (280) and a second guide body (380) provided closest to a distal end side of the first guide body (280), and
when the outer protector (110) and the inner protector (120) are viewed by being projected onto a hypothetical plane perpendicular to said axis of the gas sensor (1),
an outer peripheral surface of the first guide body (280) is provided in an acute-angled region sandwiched between
a first hypothetical straight line (M-M) which passes through a point (K) on an outer peripheral surface side at a proximal end of the first guide body (280) and passes through a point (I) on an inner peripheral surface side at a proximal end of the second guide body (380), and
a second hypothetical straight line (N-N) which passes through the point K on the outer peripheral surface side at the proximal end of the first guide body (280) and which circumscribes an outer peripheral surface of the side wall (122) of the inner protector (120).

9. The gas sensor (1) according to any one of claims 1 to 8, wherein, four or more of the outer introduction holes (170, 270, 370) are provided at the outer protector (110) along the circumferential direction of the outer protector (110).

10. The gas sensor (1) according to any one of claims 1 to 9, wherein the inner protector includes a bottom wall (124) provided with a discharge hole (125), an inner tapered portion (123) provided between the side wall (122) of the inner protector and the bottom wall (124) of the inner protector, and the outer protector includes an outer tapered portion (213) connected to a leading end of the side wall (112) of the outer protector, and wherein the distance (L6) between the leading end of the outer tapered portion and the inner tapered portion is smaller than the distance (L5) between the side wall of the outer protector and the side wall of the inner protector.

## Patentansprüche

1. Gassensor (1), umfassend:
ein Detektierelement (10) mit einem Detektierabschnitt (11) zum Detektieren eines zu messenden Gases an einer vorderen Endseite des Detektierelements (10);
ein Gehäuse (50), das das Detektierelement (10) so umgibt, dass das Detektierelement (10) von einem vorderen Ende des Gehäuses (50) vorsteht;
einen Innenschutz (120), der in dem Gehäuse (50) befestigt ist und den Detektierabschnitt (11) des Detektierelements (10) aufnimmt, wobei der Innenschutz (120) eine Seitenwand (122) aufweist, die mit einem inneren Einleitloch (130) zum Einleiten des zu messenden Gases in einen Innenraum des Innenschutzes (120) versehen ist;
einen Außenschutz (110), der mindestens die Seitenwand (122) des Innenschutzes (120) umgibt, während er bezüglich des Innenschutzes (120) einen Zwischenraum (119) wahrt, wobei der Außenschutz (110) eine Seitenwand (112) aufweist, die mit einem äußeren Einleitloch (170) zum Einleiten des zu messenden Gases in den Zwischenraum (119) versehen ist;
und
einen Führungskörper (180) mit einem proximalen Ende (181), das mit einem Öffnungsrand (171) des äußeren Einleitlochs (170) verbunden ist, und einem distalen Ende (182), das in den Zwischenraum (119) hin zu dem Innenschutz (120) ragt, wobei der Führungskörper (180) im Wesentlichen in einer Umfangsrichtung des Außenschutzes (110) verläuft und ausgelegt ist, um einen Strömungsweg des zu messenden Gases, das in den Zwischenraum (119) eingeleitet wird, zu lenken,
wobei in einer Querschnittebene (A-A) senkrecht zu einer Achse (O) des Gassensors und an einer Seite einer Außenumfangsfläche (118) des Außenschutzes (110) eine Länge (L1) entlang der Umfangsrichtung des äußeren Einleitlochs (170) länger als eine Länge (L2) zwischen dem distalen Ende (182) und dem proximalen Ende (181) des Führungskörpers (180) ist.

2. Gassensor (1) nach Anspruch 1, wobei die Länge (L1) entlang der Umfangsrichtung des äußeren Einleitlochs (170) und die Länge (L2) zwischen dem distalen Ende (182) und dem proximalen Ende (181) des Führungskörpers (180) eine Beziehung 0,5 ≤ L2/L1 ≤ 0,75 erfüllen.

3. Gassensor (1) nach Anspruch 1 oder 2, oder wobei ein Abstand zwischen dem distalen Ende (182) des Führungskörpers (180) und einem Öffnungsrand (172) des äußeren Einleitlochs (170) größer als ein Abstand zwischen dem distalen Ende (182) des Führungskörpers (180) und der Seitenwand (122) des Innenschutzes (120) ist.

4. Gassensor (1) nach einem der Ansprüche 1 bis 3, wobei ein Abstand zwischen dem distalen Ende (182) des Führungskörpers (180) und einem Öffnungsrand (172) des äußeren Einleitlochs (170) 0,5 mm oder mehr beträgt.

5. Gassensor (1) nach einem der Ansprüche 1 bis 4, wobei der Abstand zwischen dem distalen Ende (182) des Führungskörpers (180) und einem Öffnungsrand (172) des äußeren Einleitlochs (170) 1,5 mm oder weniger beträgt.

6. Gassensor (1) nach Anspruch 5, wobei der Abstand zwischen dem distalen Ende (182) des Führungskörpers (180) und einem Öffnungsrand (172) des äußeren Einleitlochs (170) 1,2 mm oder weniger beträgt.

7. Gassensor (1) nach einem der Ansprüche 1 bis 6, wobei der Führungskörper (180) durch nach Innenbiegen eines Abschnitts der Seitenwand (112) des Außenschutzes (110) gebildet ist und, falls der Führungskörper (180) so zurückgebogen ist, dass er nahe zur Seitenwand (112) des Außenschutzes (110) ausgerichtet ist, die Länge (L1) entlang der Umfangsrichtung des äußeren Einleitlochs (170) und die Länge (L2) zwischen dem distalen Ende (182) und dem proximalen Ende (181) des Führungskörpers (180) eine Beziehung L1 - L2 ≥ 0,3 mm erfüllen.

8. Gassensor (1) nach einem der Ansprüche 1 bis 7, wobei mehrere Führungskörper (180, 280, 380) entlang der Umfangsrichtung vorgesehen sind, wobei die mehreren Führungskörper einen ersten Führungskörper (280) und einen zweiten Führungskörper (380), der am nächsten zu einer distalen Endseite des ersten Führungskörpers (280) vorgesehen ist, umfassen und bei Betrachtung der Außenschutzes (110) und des Innenschutzes (120) bei Projektion auf eine hypothetische Ebene senkrecht zu der Achse des Gassensors (1)
eine Außenumfangsfläche des ersten Führungskörpers (280) in einem spitzwinkligen Bereich vorgesehen ist, der zwischen
einer ersten hypothetischen Geraden (M-M), die an einem proximalen Ende des ersten Führungskörpers (280) durch einen Punkt (K) an einer Außenumfangsflächenseite tritt und an einem proximalen Ende des zweiten Führungskörpers (380) durch einen Punkt (I) an einer Innenumfangsflächenseite tritt, und
einer zweiten hypothetischen Geraden (N-N), die an dem proximalen Ende des ersten Führungskörpers (280) durch den Punkt K an der Außenumfangsflächenseite tritt und die eine Außenumfangsfläche der Seitenwand (122) des Innenschutzes (120) umschreibt,
sandwichartig eingesetzt ist.

9. Gassensor (1) nach einem der Ansprüche 1 bis 8, wobei vier oder mehr der äußeren Einleitlöcher (170, 270, 370) entlang der Umfangsrichtung des Außenschutzes (110) an dem Außenschutz (110) vorgesehen sind.

10. Gassensor (1) nach einem der Ansprüche 1 bis 9, wobei der Innenschutz eine Bodenwand (124), die mit einem Abführloch (125) versehen ist, einen zulaufenden Innenabschnitt (123), der zwischen der Seitenwand (122) des Innenschutzes und der Bodenwand (124) des Innenschutzes vorgesehen ist, umfasst und der Außenschutz einen zulaufenden Außenabschnitt (213), der mit einem vorderen Ende der Seitenwand (112) des Außenschutzes verbunden ist, umfasst und wobei der Abstand (L6) zwischen dem vorderen Ende des zulaufenden Außenabschnitts und dem zulaufenden Innenabschnitt kleiner als der Abstand (L5) zwischen der Seitenwand des Außenschutzes und der Seitenwand des Innenschutzes ist.

## Revendications

1. Capteur de gaz (1), comprenant :
un élément de détection (10) comportant une partie de détection (11) destinée à détecter un gaz à mesurer sur un côté d'extrémité avant de l'élément de détection (10) ;
un boîtier (50) entourant l'élément de détection (10) de telle sorte que l'élément de détection (10) dépasse d'une extrémité avant du boîtier (50) ;
un protecteur intérieur (120) fixé dans le boîtier (50) et recevant la partie de détection (11) de l'élément de détection (10), le protecteur intérieur (120) comportant une paroi latérale (122) dotée d'un trou d'introduction intérieur (130) destiné à l'introduction du gaz à mesurer dans l'intérieur du protecteur intérieur (120) ;
un protecteur extérieur (110) entourant au moins la paroi latérale (122) du protecteur intérieur (120) tout en conservant un espace d'écartement (119) par rapport au protecteur intérieur (120), le protecteur extérieur (110) comportant une paroi latérale (112) dotée d'un trou d'introduction extérieur (170) destiné à l'introduction dans l'espace d'écartement (119) du gaz à mesurer ; et
un corps de guidage (180) comportant une extrémité proximale (181) reliée à un bord d'ouverture (171) du trou d'introduction extérieur (170) et une extrémité distale (182) dépassant dans l'espace d'écartement (119) vers le protecteur intérieur (120), le corps de guidage (180) s'étendant sensiblement dans une direction circonférentielle du protecteur extérieur (110) et étant adapté pour guider un passage d'écoulement du gaz à mesurer qui est introduit dans l'espace d'écartement (119),
dans lequel, dans un plan de section transversale (A-A) perpendiculaire à un axe (O) du capteur de gaz et sur un côté de surface périphérique extérieure (118) du protecteur extérieur (110), une longueur (L1) le long de la direction circonférentielle du trou d'introduction extérieur (170) est supérieure à une longueur (L2) entre l'extrémité distale (182) et l'extrémité proximale (181) du corps de guidage (180).

2. Capteur de gaz (1) selon la revendication 1, dans lequel la longueur (L1) le long de la direction circonférentielle du trou d'introduction extérieur (170) et la longueur (L2) entre l'extrémité distale (182) et l'extrémité proximale (181) du corps de guidage (180) satisfait à un rapport, 0,5 ≤ L2/L1 ≤ 0,75.

3. Capteur de gaz (1) selon la revendication 1 ou 2, dans lequel une distance entre l'extrémité distale (182) du corps de guidage (180) et un bord d'ouverture (172) du trou d'introduction extérieur (170) est supérieure à une distance entre l'extrémité distale (182) du corps de guidage (180) et la paroi latérale (122) du protecteur intérieur (120).

4. Capteur de gaz (1) selon l'une quelconque des revendications 1 à 3, dans lequel
une distance entre l'extrémité distale (182) du corps de guidage (180) et un bord d'ouverture (172) du trou d'introduction extérieur (170) est de 0,5 mm ou plus.

5. Capteur de gaz (1) selon l'une quelconque des revendications 1 à 4, dans lequel
la distance entre l'extrémité distale (182) du corps de guidage (180) et un bord d'ouverture (172) du trou d'introduction extérieur (170) est de 1,5 mm ou moins.

6. Capteur de gaz (1) selon la revendication 5, dans lequel la distance entre l'extrémité distale (182) du corps de guidage (180) et un bord d'ouverture (172) du trou d'introduction extérieur (170) est de 1,2 mm ou moins.

7. Capteur de gaz (1) selon l'une quelconque des revendications 1 à 6, dans lequel
le corps de guidage (180) est formé en courbant vers l'intérieur une partie de la paroi latérale (112) du protecteur extérieur (110), et dans le cas où le corps de guidage (180) est recourbé en arrière de manière à être orienté pour être proche de la paroi latérale (112) du protecteur extérieur (110), la longueur (L1) le long de la direction circonférentielle du trou d'introduction extérieur (170) et la longueur (L2) entre l'extrémité distale (182) et l'extrémité proximale (181) du corps de guidage (180) satisfont à un rapport, L1 - L2 ≥0,3 mm.

8. Capteur de gaz (1) selon l'une quelconque des revendications 1 à 7, dans lequel
une pluralité des corps de guidage (180, 280, 380) est prévue le long de la direction circonférentielle, la pluralité des corps de guidage comprenant un premier corps de guidage (280) et un second corps de guidage (380) prévu le plus près d'un côté d'extrémité distale du premier corps de guidage (280), et quand le protecteur extérieur (110) et le protecteur intérieur (120) sont vus de manière projetée sur un plan imaginaire perpendiculaire audit axe du capteur de gaz (1),
une surface périphérique extérieure du premier corps de guidage (280) est prévue dans une zone formant un angle aigu, prise en sandwich entre une première ligne droite imaginaire (M-M) qui passe par un point (K) sur un côté de surface périphérique extérieure à une extrémité proximale du premier corps de guidage (280) et passe par un point (I) sur un côté de surface périphérique intérieure à une extrémité proximale du second corps de guidage (380), et
une seconde ligne droite imaginaire (N-N) qui passe par le point K sur le côté de surface périphérique extérieure à l'extrémité proximale du premier corps de guidage (280) et qui circonscrit une surface périphérique extérieure de la paroi latérale (122) du protecteur intérieur (120).

9. Capteur de gaz (1) selon l'une quelconque des revendications 1 à 8, dans lequel
quatre des trous d'introduction extérieurs (170, 270, 370) ou plus sont prévus sur le protecteur extérieur (110) le long de la direction circonférentielle du protecteur extérieur (110).

10. Capteur de gaz (1) selon l'une quelconque des revendications 1 à 9, dans lequel
le protecteur intérieur comprend une paroi inférieure (124) dotée d'un trou d'évacuation (125), une partie intérieure à section décroissante (123) prévue entre la paroi latérale (122) du protecteur intérieur et la paroi inférieure (124) du protecteur intérieur et le protecteur extérieur comprend une partie extérieure à section décroissante (213) reliée à une extrémité avant de la paroi latérale (112) du protecteur extérieur, et dans lequel la distance (L6) entre l'extrémité avant de la partie extérieure à section décroissante et la partie intérieure à section décroissante est inférieure à la distance (L5) entre la paroi latérale du protecteur extérieur et la paroi latérale du protecteur intérieur.
